Europäisches Patentamt

(19) European Patent Office

Office européen des brevets

(11) Publication number: **0 051 501**

**A1**

(12) # EUROPEAN PATENT APPLICATION

(21) Application number: **81305259.4**

(22) Date of filing: **05.11.81**

(51) Int. Cl.³: **B 01 D 53/26**

(30) Priority: **05.11.80 JP 154590/80**

(43) Date of publication of application:
**12.05.82 Bulletin 82/19**

(84) Designated Contracting States:
**AT BE CH DE FR GB IT LI LU NL SE**

(71) Applicant: **HEI CO.,LTD**
**10-5, Nobidome 4-chome**
**Niiza-shi Saitama-ken(JP)**

(72) Inventor: **Naganuma, Haruo**
**Ohmiya Plaza 50-13 No. 1596-54 Sachigawa**
**Ohmiya-shi Saitama-ken(JP)**

(74) Representative: **Bayliss, Geoffrey Cyril et al,**
**BOULT, WADE & TENNANT 27 Furnival Street**
**London EC4A 1PQ(GB)**

(54) **Rotary dehumidifiers.**

(57) A rotary dehumidifier is disclosed which divides the heat-exchange process in a slowly rotating drum containing a filler impregnated with hygroscopic agent into a drying region (P) where the air to be treated is dried and a regenerating region where the filler is de-humidified. By recycling the air which has been passed through a portion of the drying region immediately after the regeneration to the regenerating region so as to lower the temperature of the preheated air for regeneration and further by reducing the cooling of the dried and processed air, considerable savings in energy consumption are achieved.

FIG. 2.

EP 0 051 501 A1

## "ROTARY DEHUMIDIFIERS"

The present invention concerns rotary dehumidifiers.

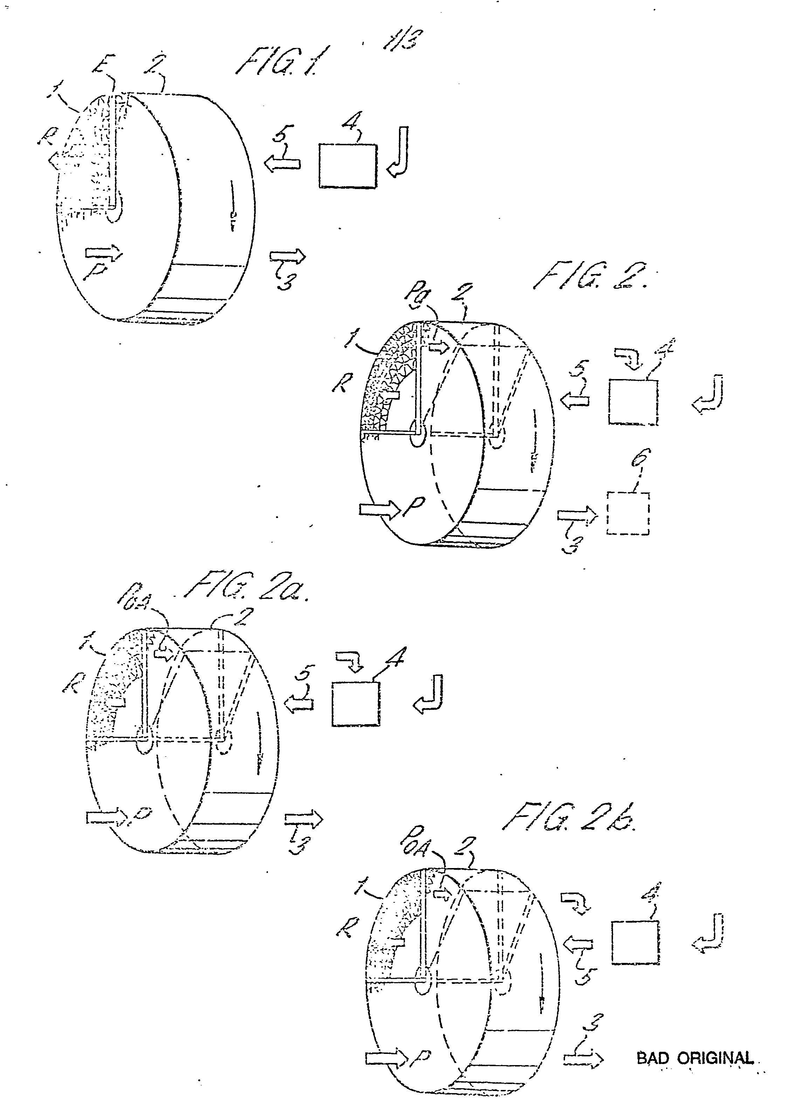

The rotary dehumidifier of this type generally aims at dehumidifying gas and comprises a casing and a rotary rotor 2 shaped like a drum which is rotatably housed in the casing containing a filler 1 impregnated with a hygroscopic agent as shown in Figure 1. The drum is mounted for rotation on a shaft about an axis which is not shown. The opposing end surfaces of said drum-shaped rotor 2 are divided respectively into a first portion to be used as a drying region P and a second portion to be used as a regenerating region R. Air 3 to be dehumidified is fed to the drying region P from one side of the drum-shaped rotor 2 to the other side thereof while the preheated gas 5 consisting of atmospheric air which has been heated in a heater 4 is fed to the regenerating region R from the other side of the drum-shaped rotor 2. The air to be processed comes out from the rotor 2 on said one side thereof following regeneration by removing the moisture from the filler 1 which has absorbed moisture. Accordingly the preheated gas 5 becomes moist air by the time it has passed the drum-shaped rotor 2 and the air 3 becomes, in turn, dehumidified by the time it has passed the drum-shaped rotor 2.

With the recent trend in the society oriented to saving natural resources, there is a demand that rotary dehumidifiers reduce heating of air 5 by the heater 4 cooling of the air 3 which is needed after the dehumidifying process even if the energy required for the rotation of the drum-shaped rotor 2 or said supply could not be saved. If the temperature for heating the preheated gas 5 which usually reaches as high as 130 to 140°C is lowered, however, the regeneration/dehumidification of the filler 1 in the regenerating region R becomes insufficient, causing deterioration of the dehumidifying performance of the air 3 which is the original purpose of the device. Since the air 3 is unavoidably heated when it is passed through the filler 1 which has been heated in the regenerating region R, the air 3 is generally required to be cooled. The cooling device therefore could not be omitted.

The present invention has focused upon the above defective facts and aims at providing a rotary-type dehumidifier of which humidifying efficiency would not be lowered even if the temperature of the heater is lowered and which is adapted to use a cooling device of a minimal size in order to minimize energy consumption.

In order to achieve the above mentioned aims, the dehumidifier according to the present invention comprises a drum-shaped rotor which is rotatable around a shaft and which contains a filler impregnated with a hygroscopic agent allowing the air flow in the direction of the shaft, the opposing end surfaces of said rotor being divided into the first portion or the drying region for drying the air to be processed and the second portion or the regenerating region for regenerating said filler with the preheated gas, which is characterized in that the air which has passed through a part of said drying region adjacent to said regenerating region along the rotating direction of said drum-shaped rotor and said preheated gas which comprises the heated atmospheric air are fed to the whole area of said regenerating region.

The particular concept conceived for the present invention will first be explained. In order to achieve the above mentioned purpose of this invention, it is desired to utilize the dried air for dehumidifying and regenerating the filler 1 in the regenerating region R without depending on the heater 4 in Fig.1

The use of the preheated gas 5 which has been heated at a temperature as high as 130 to 140°C should be avoided in order to minimize the necessity of cooling the air 3. Under such limitations, a portion of the drying region P adjacent to the regenerating region R along the rotating direction of the drum-shaped rotor 2 as shown in Fig. 1 attracts attention. More specifically, after having sufficiently heated and regenerated in the regenerating region R, the filler 1 is kept at a high temperature in a portion of the drying region P extending from the boundary E between the drying region P and the regenerating region R toward the rotating direction and therefore the hygroscopic performance of the agent is not very high. Further, since the partial pressure of the preheated gas of the high temperature is higher than that of the moist air fed into the drying region P, the air 3 satisfying the desired dryness could not be obtained in the drying region P immediately after the regeneration. The temperature of the air immediately after the regeneration process becomes high since the regeneration region R has been heated making the temperature of the air 3 in the drying region P go up.

Thus the air to be processed in the drying region P immediately after the regeneration process is given particular attention.

The following is a description of some specific embodiments of the invention, reference being made to the accompanying drawings in which:

Figure 1 is a schematic perspective view of a conventional rotary dehumidifier;

Figures 2, 2a and 2b are schematic perspective views showing three embodiments according to the present invention, and

Figures 3 and 4 are respectively, performance curves.

The present invention will now be described referring to a preferred embodiment illustrated in the attached drawings.

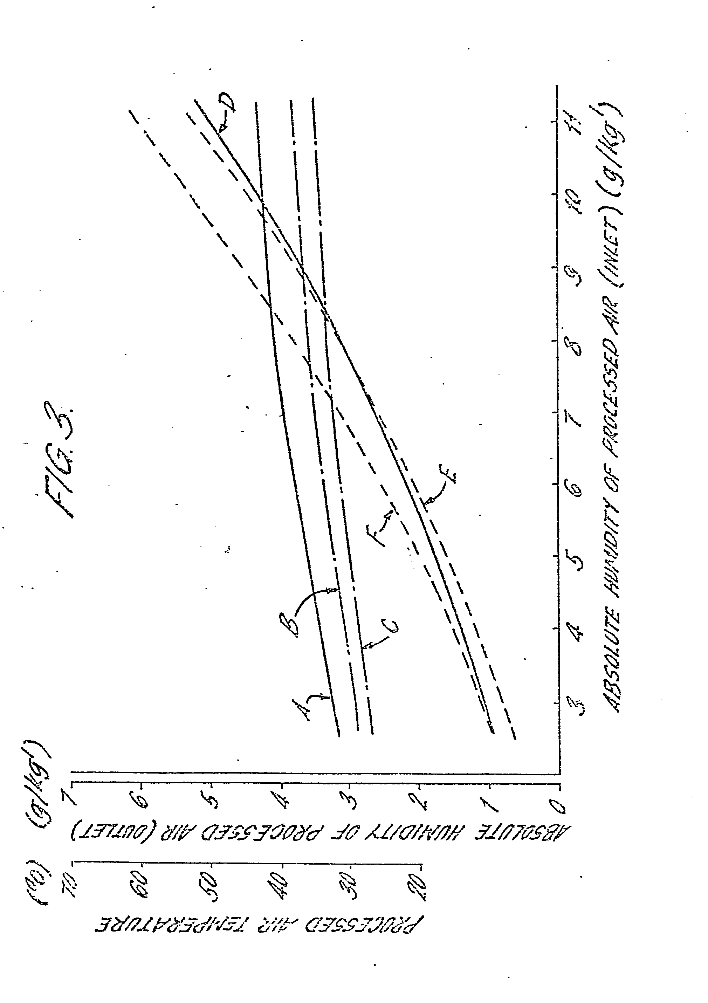

Identical reference numerals denote identical parts both in Figures 1 and 2. In Figure 2, which shows a preferred embodiment, there is provided a drying region P to obtain the air 3 in the first portion defined by the first angle (270° in the figure) of the opposing surfaces of the drum-shaped rotor 2 which contains the filler 1. A purge region Pg is formed in a portion of the drying region P adjacent to the regenerating region R and in the direction of the rotation of the rotor. The purge region Pg may be defined by an angle, for example by 30°, and allows the air flow in a manner similar to the drying region P. The purge region Pg is provided on the drum-shaped rotor 2 in order to achieve the following effects. Because of the high temperature and the insufficient dehumidification in the purge region Pg as described hereinabove the air obtained therefrom can not quite meet the desired standard as the processed air 3.

In other words, the temperature of the air coming from the purge region Pg is too high and the air is not sufficiently dry even after dehumidification. The processed air coming from the purge region Pg, on the other hand, is slightly lower in temperature and drier when compared to the preheated gas 5 shown in Fig.1. Therefore, if the air coming from the purge region Pg is mixed with the atmospheric air which is to be preheated, an air which is drier and hotter will be obtained. If this gas mixture is fed to the heater 4, the energy required for the heating process can be saved compared to the conventional process because the mixture has already been dried and heated to a certain degree. The temperature of the preheated gas coming from the heater 4 may be around 100°C.

In Fig.2a which shows another preferred embodiment, there is provided a drying region P to obtain the air 3 in the first portion defined by the first angle (270° in the figure) of the opposing surfaces of the drum-shaped rotor 2 which contains the filler 1. A purge region Po$_A$ is formed on a portion of the drying region P adjacent to the regenerating region R and in the direction of the rotation of the rotor. The purge region Po$_A$ may be defined by an angle, for example by 30°, and allows the air flow in a manner similar to the drying region P but with air the outside or the same as used for the regeneration. The purge region Po$_A$ is provided on the drum-shaped rotor 2 in order to achieve the following effects. Because of the high temperature and the insufficient dehumidification in the purge region PoA the air obtained therefrom can not quite meet the desired standard as the processed air 3. In other words, the temperature of the air coming from the purge region PoA is too high and the air is not sufficiently dry even after dehumidification. The outside air coming from the purge region POA on the other hand, is slightly lower in temperature when compared to the preheated gas 5 shown in Fig.1. When the air coming from the purge region PoA is mixed with the atmospheric air which is to be preheated, and fed to the heater 4, some energy required for the heating process can be saved compared to the conventional process because the part of the air which has passed through the purge region has already been heated to a certain degree. The temperature of the preheated gas coming from the heater 4 should be around 140°C or the same as in the conventional dehumidifier.

Also, the air coming from the purge region PoA can be mixed with already preheated outside air and supplied through the whole area of said regenerating region as shown in Fig.2b.

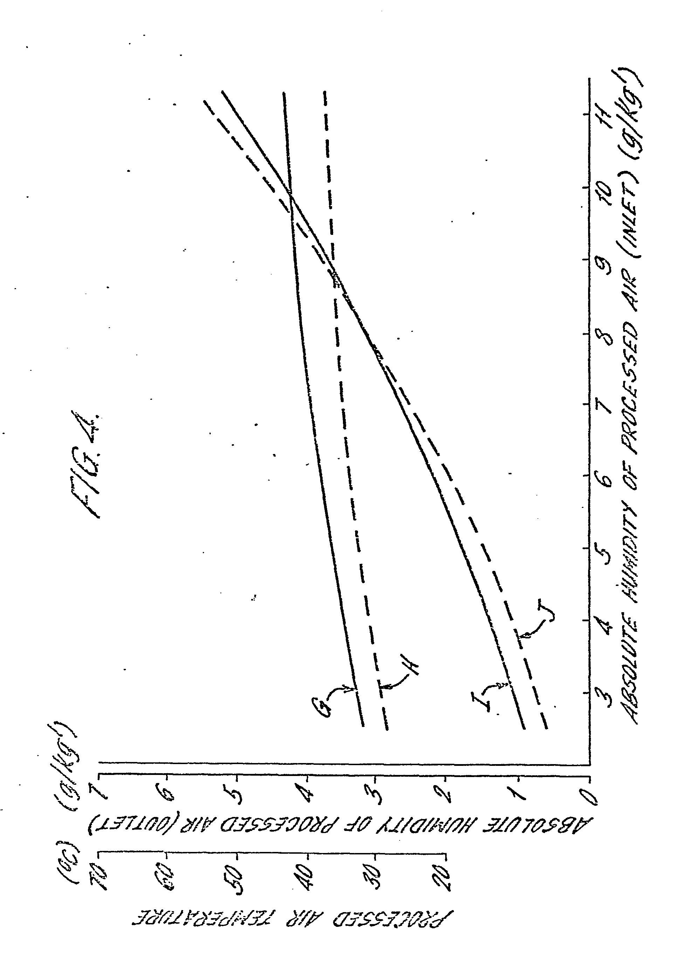

Referring to Fig.3 the results of experiments are indicated to show the comparison between the processed air conventionally obtained as shown in Fig.1 and the processed air 3 obtained as shown in Fig.2. In the graph the abscissa expresses the humidity (g/kg') of the air to be dehumidified (the air to become the processed air) at the entrance to the drying region P while the ordinate expresses the absolute temperature/and the absolute humidity (g/kg'). The temperature of the air to be processed
at the entrance of the drying region P is set to be 20°C and the
revolution of the drum-shaped rotor 2 is set to be 30 (RPH).
The regenerating region R is defined by 90°, the drying region
by 270° and the purge region Pg by 30°. The ratio of the air
between the regenerating region R and the drying region P (
including the purge region Pg in the case of Fig.2) is set to
be 0.33, i.e. the amount of the air in R/the amount of the air
in P = 1/3. Since the ratio of the area between the regenerating
region R and the drying region P is set to be 90° : 270° while
the ratio of the air between the regions is set to be 1 : 3,
the weight velocity of both the regenerating region R and the
drying region P becomes identical. In this case, $V_p = 5$ kg/m$^2$.S.
Under the above mentioned conditions the performance curve of
the conventional dehumidifier shown in Fig.1 is compared with
the one of the embodiment shown in Fig.2. In the conventional
dehumidifier shown in Fig.1 the temperature of the preheated gas
is set to be 140°C while the temperature of the mixed gas in the
preferred embodiment of the present invention is set to be 100°C
and 120°C. The temperature of thus obtained processed gas is
higher in the conventional device of Fig.1 compared to that in
the embodiment of the present invention. As shown in the graph
the curve A is above the curve B (using the preheated gas of
120°C) and the curve C (using the preheated gas of 100°C). The
humidity of the processed air 3 in the conventional device shown in Fig. 1 is substantially the same as that of the
embodiment according to the present invention. Particularly
there is no significant difference between the curve D
(conventional) and the curve E (using the preheated gas of
120°C). What is obvious from the performance curves in Fig. 3
is that the temperature of the processed air 3 can be reduced
by 10 to 15°C in the preferred embodiment, eliminating the need
for the cooling device 6 or at least minimizing the size of the

cooling device, if needed. Further judging from the fact that
the temperatures indicated by the curves D and E are substantially
identical, the degree of heating in the heater 4 for obtaining
the preheated gas can be limited to a certain degree. If it
is assumed that the calory for the regeneration for obtaining
the preheated gas of 140°C is 100% in the conventional device,
the calory for the regeneration required for the preheated gas
of 120°C in this embodiment becomes 72.7%. This percentage of
the calory could be further reduced .to 59.1% for the preheated
gas of 100°C as indicated by the humidity curve F, although
the temperature lowered as low as 100°C also slightly reduces
the dehumidification performance. In short, the energy required
for heating as well as for cooling could be considerably saved
in this embodiment compared to the conventional device.

Fig. 4 indicates respective performance curves of the
dehumidifiers shown in Figs. 1 and 2 wherein the temperature
of the preheated gas is set to be 100°C, the temperature of the air to be dehumidified at the entrance to the drying region P
20°C, the revolution 20 RPH, the ratio of air volume 1/3 = 0.33,
the ratio of area 90°/270°, the angle defining the purge region
30° and the weight velocity of the conventional device is 5
$(kg/m^2.S)$ while the weight velocity of this embodiment is 2.5
$(kg/m^2.S)$. In Fig. 4 which shows the temperature, the conventional curve G is higher by about 10°C than the curve H of this
embodiment while there is no significant difference observed
between the dehumidifying performance curve L (conventional)
and that of curve J (this embodiment). In this embodiment,
therefore, it is revealed that compared with the conventional
device, the cooling device can be made compact and the energy
required for obtaining the preheated gas of 100°C can be saved
by 54.5% in regenerating calory of the conventional device.
For such arrangement wherein the weight velocity ratio is
2 : 1 in two sections, a drum-shaped rotor 2 which is twice
as large as the conventional one in size should be installed.
This may require the initial cost for the installation slightly
higher than the conventional device and the area larger than
the conventional device, but the reduction in operation cost
achieved as explained hereinabove could sufficiently offset
such an increase.

As explained hereinabove, the present invention achieves
reduction in energy required for heating and cooling by heating
the process air in the purge region together with the atmospheric
air to use as the preheated gas.

CLAIMS:

1. A rotary dehumidifier comprising a drum-shaped rotor rotatable around an axis containing a filler impregnated with a hygroscopic agent and which allows air flow in the direction of the axis, the opposing axially spaced faces of said drum-shaped rotor being divided into a drying region defined by a first angle around said axis for drying the air to be processed and a regenerating region defined by a second angle for regenerating said filler with a preheated gas, characterised in that the rotor is so constructed that the processed air which has passed through a portion of said drying region adjacent to said regenerating region and said preheated gas heated by the atmospheric air are supplied through the whole area of said regenerating region.

2. A rotary dehumidifier comprising a drum-shaped rotor rotatable around an axis which drum contains a filler impregnated with a hygroscopic agent and which allows air flow in the direction of the shaft, the opposing faces of said drum-shaped rotor being divided into a drying region defined by the first angle around said axis for drying the air to be processed and a regenerating region defined by the second angle for regenerating said filler with preheated outside air which is characterised in that further non-preheated outside air which has passed through a portion of said drying region adjacent to said regenerating region is mixed with and heated together with sufficient outside air and is supplied through the whole area of said regenerating region.


3. A rotary dehumidifier comprising a drum-shaped rotor rotatable around an axis which drum contains a filler impregnated with a hygroscopic agent and allows the air flow in the direction of the axis, the opposing faces of said drum-shaped rotor being divided into a drying region defined by the first angle around said axis for drying the air to be processed and a regenerating region defined by the second angle for regenerating said filler with preheated outside air which is characterised in that further non-preheated outside air which has passed through a portion of said drying region adjacent to said regenerating region is mixed with already preheated outside air and is supplied through the whole area of said regenerating region.

FIG. 1

FIG. 2.

FIG. 2a.

FIG. 2b.

BAD ORIGINAL

FIG.3.

ABSOLUTE HUMIDITY OF PROCESSED AIR (INLET) (g/kg')

PROCESSED AIR TEMPERATURE (°C)

ABSOLUTE HUMIDITY OF PROCESSED AIR (OUTLET) (g/kg')

FIG.4.

3/3

0051501

BAD ORIGINAL

## EUROPEAN SEARCH REPORT

European Patent Office

Application number

EP 81 30 5259

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| XY | US – A – 4 134 743 (R.A. MACRISS)<br>* Figure 1; column 4, line 22 to column 6, line 18 * | 1,2,3 | B 01 D 53/26 |
| Y | GB – A – 891 396 (LIZENZIA AG)<br>* Page 4, lines 24–54 * | 1,2 | |

TECHNICAL FIELDS SEARCHED (Int.Cl. 3)

B 01 D

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| | | |
|---|---|---|
| X | The present search report has been drawn up for all claims | |
| Place of search<br>The Hague | Date of completion of the search<br>12-02-1982 | Examiner<br>BOGAERTS |

EPO Form 1503.1  06.78